# EUROPEAN PATENT SPECIFICATION

(11) **EP 4 660 395 B1**
(45) Date of publication and mention of the grant of the patent: **22.07.2026**
(21) Application number: 25179641.3
(22) Date of filing: 29.05.2025
(51) Int. Cl.: E04H 1/02, E04H 15/04

(54) **STRUCTURE FOR PREVENTING RAIN LEAKAGE IN TREE HOUSE**
STRUKTUR ZUR VERHINDERUNG VON REGENLECKS IN BAUMHÄUSERN
STRUCTURE POUR EMPÊCHER UNE PENETRATION DE PLUIE DANS UNE CABANE

(30) Priority: 03.06.2024 JP 2024090315
(43) Date of publication of application: 10.12.2025
(73) Proprietor: Treeful Inc., Nago-shi, Okinawa 905-1141 (JP)
(72) Inventor: JEONG, Jeein, 17716 Gyeonggi-do (KR)
(74) Representative: Lewis Silkin LLP

(56) References cited:
- JP-B1- 6 744 644
- ANONYMOUS: "Single Spruce Treehome - Nelson Treehouse", 28 April 2017 (2017-04-28), XP093003082, Retrieved from the Internet <URL:https://nelsontreehouse.com/blog/treehousefriday-sitka-treehome/> [retrieved on 20221129]
- ANONYMOUS: "Fuji Tree House", INTERNET CITATION, 12 January 2016 (2016-01-12), pages 1 - 8, XP009534033, Retrieved from the Internet <URL:https://web.archive.org/web/20160112034137/http://ekip.co.jp/works/fuji/> [retrieved on 20251022]

## Description

### DETAILED DESCRIPTION OF THE INVENTION

### TECHNICAL FIELD

The present invention relates to a structure for preventing rain leakage between a trunk of a tree and a roof installed in a tree house.

### BACKGROUND ART

Tree houses are built using a living tree as their foundation. Traditionally, such tree houses have been used as houses of natives in tropical rainforest regions such as Southeast Asia and South America. It has been considered that these people have settled in tree houses due to issues related to the land on which they build their houses, as well as for protection themselves from wild animals and hostile forces.

In recent years, however, the building of tree houses for the purpose of hobbies, entertainment, recreation, and tourism has been attracting attention. In other words, tree houses are increasingly being recognized as a kind of tourism resource. Staying in a tree house is favored for the opportunity it provides to enjoy a lifestyle that is integrated with the natural environment.

Meanwhile, when building a tree house using a conifer with few branches, the trunk of the conifer is vertically upright so that the trunk can be used as pillar. However, due to design requirements, it is necessary to penetrate the roof with the tree (trunk), which inevitably leads to rain leakage through the gap between the roof and the trunk, allowing rainwater to enter.

### CITATION LIST

### PATENT LITERATURE

Patent Literature 1:
Japanese Patent No. 6744644

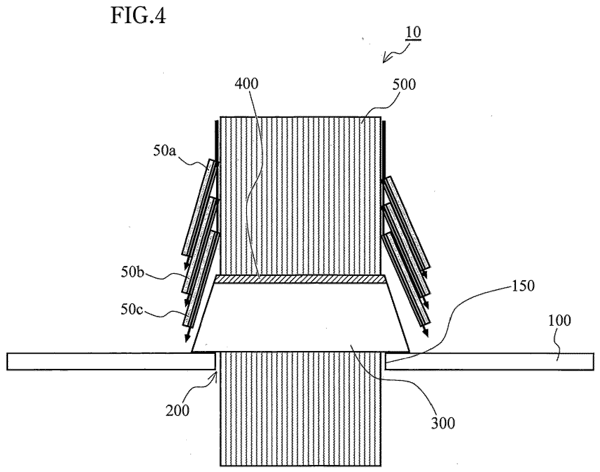

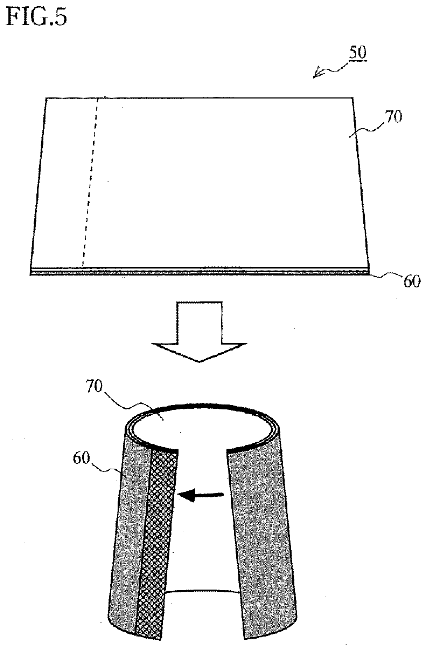

Patent Literature 1 discloses a structure for preventing rain leakage through the gap between the roof and the trunk by wrapping around the trunk a two-layers of a waterproof sheet (see FIG. 5) composed of a waterproof sheet and a non-woven fabric provided with water absorption property, and drainage property, as shown in FIG. 4. Another gasket for preventing rain leakage in a treehouse is known from "Single Spruce Treehome - Nelson Treehouse", 28 April 2017, XP093003082, retrieved from the Internet:https://nelsontreehouse.com/blog/treehousefriday-sitka-treehome/).

### DISCLOSURE OF INVENTION

### PROBLEM TO BE SOLVED BY THE INVENTION

Normally, the surface (outer periphery) of a tree is covered with a tissue called outer bark, which has an uneven texture and is composed of fibers that allows water to pass through, thereby permitting rainwater to infiltrate.

In the invention described in Patent Literature 1, rainwater infiltration into the tree house is prevented by bringing the non-woven fabric side of the two-layer waterproof sheet into contact with the outer bark to absorb rainwater.

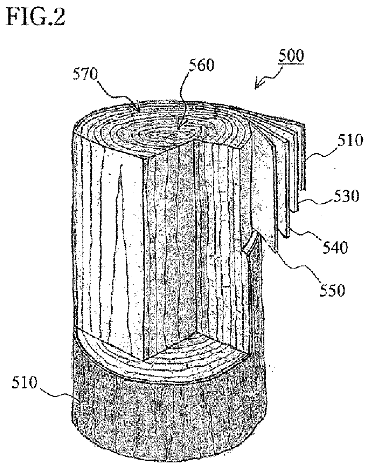

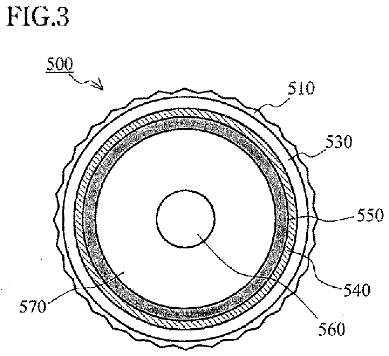

By the way, as shown in FIG. 2 and FIG. 3, a tree is composed, from the outer periphery inward, of an outer bark 510, a phellogen 530, an inner bark (phloem) 540, and a cambium 550.

Here, the cambium 550 is a tissue essential for the growth of the tree, and damaging this layer can cause serious harm to the growth (survival) of the tree.

On the other hand, although the outer bark 510 serves to protect the entire tree, the removal of only this outer bark has little impact on the growth (survival) of the tree.

Therefore, an object of the present invention is to provide a structure for preventing rain leakage in a tree house by applying a treatment to the outer bark, which has relatively little impact on the growth of the tree, thereby preventing rain leakage while maintaining the growth of the tree.

### SUMMARY OF THE INVENTION(S)

The invention described in claim 1 provides a structure for preventing rain leakage in a tree house built by using a tree trunk as a pillar, wherein an outer bark removal portion is formed on the upper part of the roof of the tree house by removing the outer bark of the trunk circumferentially with a predetermined width, a rubber tape corresponding to the width of the outer bark removal portion is wound therearound, a silicone resin is applied circumferentially to bond the upper end of an umbrella-shaped rubber to the rubber tape, and the lower end of the umbrella-shaped rubber is bonded to the upper part of the roof.

The invention described in claim 2 provides the structure for preventing rain leakage in a tree house according to claim 1, wherein the outer bark removal portion exposes the phellogen of the tree, and the rubber tape is wound around the exposed phellogen.

The invention described in claim 3 provides the structure for preventing rain leakage in a tree house according to claim 1 or claim 2, wherein the rubber tape is made of EPDM (ethylene propylene diene monomer rubber).

The invention described in claim 4 provides the structure for preventing rain leakage in a tree house according to claim 1 or claim 2, wherein a highly water-absorbent and drainable non-woven fabric is wrapped around the upper portion of the upper end of the umbrella-shaped rubber.

### EFFECT OF THE INVENTION(S)

According to the present invention, in a tree house that uses a tree trunk as a pillar, it is possible to efficiently prevent rain leakage using only commonly available commercial materials.

### BRIEF DESCRIPTION OF DRAWINGS

FIG. 1 is a drawing for describing a configuration of a structure for preventing rain leakage according to the present embodiment.
FIG. 2 is a drawing for describing the internal structure of a tree according to the present embodiment.
FIG. 3 is a drawing for describing a cross-sectional internal structure of a tree according to the present embodiment.
FIG. 4 is a drawing for describing the configuration of a structure for preventing rain leakage using a two-layer waterproof sheet.
FIG. 5 is a drawing for describing the two-layer waterproof sheet used in the structure for preventing rain leakage.
FIG. 6 is a drawing for describing the position where a highly water-absorbent and drainable non-woven fabric is wrapped in the structure for preventing rain leakage according to another embodiment.

### BEST MODE(S) FOR CARRYING OUT THE INVENTION

### (i) Outline of Embodiments

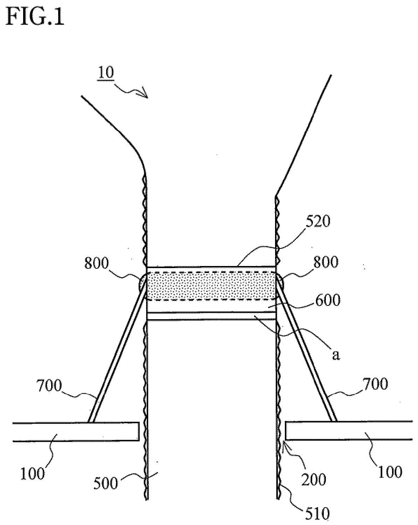

Hereinafter, a preferred embodiment of the present invention will be described in detail by referring to FIGS.1 to 5.

FIG. 1 is a drawing for describing a configuration of a structure for preventing rain leakage according to the present embodiment.

As shown in this drawing, the structure for preventing rain leakage of the tree house 10 is configured such that the roof 100 of the tree house 10 penetrates and is installed through the trunk 500 of a tree (for example, a coniferous tree). Coniferous trees exhibit a high degree of verticality, and when used as pillars for a tree house 10, they are considered to provide an aesthetically pleasing appearance and enable the construction of a sturdy and safe tree house.

A gap 200 is inevitably formed between the tree 500 and the roof 100 due to the unevenness on the surface (outer bark) of the tree 500. Therefore, in the present embodiment, a portion of the tree 500 located above the roof 100 is processed by removing only the outer bark 510 circumferentially, for example, by about 5 cm in width, thereby forming an outer bark removal portion 520.

Here, for example, a rubber tape 600 with a width of approximately 4 cm is wound around the circumference. Over this, an umbrella-shaped rubber 700 is wrapped, with its other end adhered to the roof 100. A silicone resin 800 is applied (disposed) to the rubber tape 600 and the upper portion of the umbrella-shaped rubber 700 in a width of approximately 2 to 3 cm. This applied silicone resin 800 firmly bonds the rubber tape 600 and the umbrella-shaped rubber 700 together and also prevents the intrusion of rainwater from above.

Then, since the umbrella-shaped rubber 700 completely covers the gap 200, rainwater does not enter the interior of the tree house 10, thereby achieving effective rain leakage prevention.

### (ii) Details of Embodiments

First, the outer (outer periphery) internal composition of the tree will be described with reference to FIG. 2 and FIG. 3. As shown in FIG. 2 and FIG. 3, the outer portion of the tree (hereinafter referred to as the "bark") is composed of an outer bark 510, a phellogen 530, an inner bark (phloem) 540, and a cambium 550 (note that slight variations may exist depending on the type of tree). Further, inside the cambium 550, a xylem 570 and a core 560 are formed.

Here, the thickening of the tree trunk occurs as the cambium 550 expands its own circumference while generating xylem cells on the inner side and inner bark (phloem) cells on the outer side. As the trunk gradually becomes thicker, a new meristematic tissue called the phellogen 530 is formed to protect the enlarged trunk, and this tissue produces cork tissue with thick cell walls that inhibit the passage of moisture, thereby serving to protect the trunk 500.

Therefore, the cambium 550 plays the most critical role in the growth (survival) of the tree, while the phellogen 530 functions to protect the tree.

On the other hand, although the outer bark 510 also serves a protective function, it is not essential for the survival of the tree, and its partial removal is acceptable in terms of maintaining the tree's viability. The present embodiment is based on this understanding.

Next, the procedure for constructing the structure for preventing rain leakage according to the present embodiment will be described.

First, an example will be described in which the roof 100 of the tree house 10 is installed by penetrating the trunk 500.

The trunk 500 has an outer bark 510 at its outermost periphery, and due to the uneven surface of the outer bark 510, a gap 200 is inevitably formed between the roof 100 and the trunk 500. Additionally, considering the future growth of the trunk 500, it is preferable to provide a slight gap 200 in advance.

On the other hand, this gap 200 presents a weakness in terms of waterproofing (rain leakage prevention) for the tree house 10.

Accordingly, the outer bark 510 of the trunk 500 at the upper part where the roof 100 is installed is removed over a certain width around the circumference. For example, the width may be 5 cm, but it may be appropriately set depending on various conditions, such as the thickness of the trunk 500 and the height of the tree.

The depth of removal corresponds to the thickness of the outer bark 510. That is, it is desirable to expose the phellogen 530. It is necessary to carry out the work with the utmost care so as not to damage the phellogen 530.

The tool used for this operation is a grafting knife commonly used for bonsai or potted plants (manufactured by Mikisyo Hamono: small knife, black carving knife, maximum length 180 mm, blade length 50 mm, made of Yasuki steel).

When the outer bark 510 is removed, the phellogen 530 becomes exposed circumferentially. This exposed portion is referred to as the outer bark removal portion 520. Among the various parts of the tree, the phellogen 530 has excellent flexibility, making it suitable for adhesion with other components.

Then, a rubber tape 600 is wound around and adhered to the exposed phellogen 530 of the outer bark removal portion 520. For the rubber tape 600, for example, a tape made of EPDM (ethylene propylene diene monomer rubber) is used. EPDM is a material that can flexibly accommodate swaying of the tree due to wind and the growth of the tree after being wrapped. In addition, it exhibits excellent weather resistance, ozone resistance, and waterproof properties.

Alternatively, instead of EPDM, a natural cork sheet and cork powder may be used.

The width of the rubber tape 600 is determined in accordance with the width of the outer bark removal portion 520. For example, if the width of the outer bark removal portion 520 is 5 cm, the width of the rubber tape 600 is set to be 5 cm or less-such as 4 cm. When set to 4 cm, as shown in FIG. 1, the lower portion "a" of the outer bark removal portion 520 remains exposed by 1 cm. This exposed section can be utilized for operational convenience. Alternatively, the exposed section may be provided at the upper part of the outer bark removal portion 520. It is also possible to make the widths of the outer bark removal portion 520 and the rubber tape 600 identical, thereby eliminating any exposed section.

The thickness of the rubber tape 600 is, for example, 1 mm. A 1 mm tape is commonly used because it offers the highest flexibility.

Next, the umbrella-shaped rubber 700 is installed. The upper end of the umbrella-shaped rubber 700 is attached in contact with the rubber tape 600 that is wound around the outer bark removal portion 520. The rubber tape 600 may be wound two or three times around the outer bark removal portion 520, depending on the depth of the removal.

The rubber tape 600 provides surface smoothness, which facilitates the joining with other components.

On the other hand, the lower end is attached to the roof 100. The attachment may be achieved by adhesion, but it may also be secured using nails or other fasteners. Both the upper and lower ends should be fixed without gaps to prevent the infiltration of rainwater, and they must be firmly secured to prevent detachment due to wind.

As shown in FIG. 1, a silicone resin 800 is applied circumferentially to the upper end of the umbrella-shaped rubber 700 in order to attach the umbrella-shaped rubber 700. The silicone resin 800 is an organic compound artificially synthesized from silicone as a raw material and exhibits excellent properties in terms of water resistance, heat resistance, electrical insulation, and surface tension.

In this manner, by applying the silicone resin 800, the adhesion between the rubber tape 600 and the umbrella-shaped rubber 700 is strengthened, and due to its water resistance, rainwater infiltration can be more reliably prevented.

If the width of the outer bark removal portion 520 is 5cm and the width of the rubber tape 600 is 4cm, the silicone resin 800 is preferably applied 2cm to 3cm in width. The rubber tape 600 and the upper end of the umbrella-shaped rubber 700 are completely covered and are bonded firmly together and also prevents the infiltration of rainwater.

The upper end of the silicone resin 800, as shown in FIG.1, it is possible to leave the outer bark removal portion 520 somewhat uncovered and it is possible to make them same position. Furthermore, the upper end of the silicone resin 800 is applied to contact the outer bark 510 a little over the outer bark removal portion 520.

Accordingly, by applying the silicone resin 800 above mentioned, the space formed by the umbrella-shaped rubber 700 is completely sealed, thereby achieving effective rain leakage prevention. As it is completely sealed, it is also possible to prevent insects and mosquito from entering.

Next, another embodiment will be described.

FIG. 5 is a diagram showing the two-layer waterproof sheet used in the invention described in Patent Literature 1. The two-layer waterproof sheet 50 is formed by bonding a waterproof sheet 60 with a non-woven fabric 70 having high water absorbency and drainage properties. Rainwater is absorbed from the upper end of the non-woven fabric 70 and discharged from the lower end.

The two-layer waterproof sheet 50 is formed into a conical shape as shown in FIG. 5 and is installed on the upper portion of the umbrella-shaped rubber 700. That is, by adding the two-layer waterproof sheet 50 to the upper portion, the waterproof performance can be further enhanced.

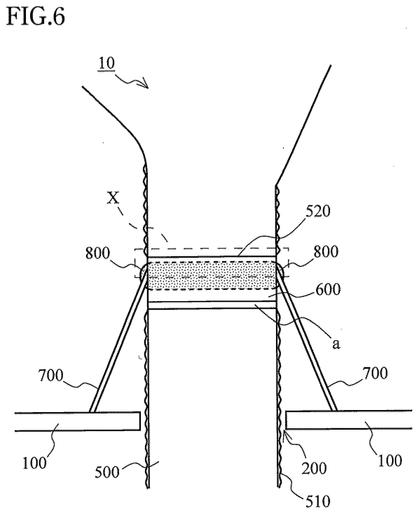

Alternatively, a highly water-absorbent and drainable non-woven fabric may be wrapped and installed at the location indicated by X in FIG. 6. This can reduce the amount of rainwater flowing down to the umbrella-shaped rubber 700 and allows for more reliable waterproofing (rain leakage prevention).

It should be noted that, when the two-layer waterproof sheet 50 is wrapped around and fixed to the trunk 500, an outer bark removal portion 520 may be formed in the same manner as in the above embodiment, the rubber tape 600 may be wound around that portion, and the two-layer waterproof sheet 50 may be adhered and fixed to that location.

In the above embodiment, a waterproof fabric may be used in place of the umbrella-shaped rubber 700.

Alternatively, the rubber tape 600 may be replaced with a stretchable silicone resin.

As another embodiment, the two-layer waterproof sheet 50 may be used in place of the umbrella-shaped rubber 700.

It should be noted that the embodiments and the various modifications of the present invention may be combined with one another as necessary.

Furthermore, the present invention may be modified in various ways without departing from the scope of the claims.

### REFERENCE SIGNS LIST

- 10: Tree house
- 50: Two-layer waterproof sheet
- 60: Waterproof sheet
- 70: Non-woven fabric
- 100: Roof
- 200: Gap
- 500: Trunk (Tree)
- 510: Outer bark
- 520: Outer bark removal portion
- 530: Phellogen
- 540: Inner bark (Phloem)
- 550: Cambium
- 560: Core
- 570: Xylem
- 600: Rubber tape
- 700: Umbrella-shaped rubber
- 800: Silicone resin

## Claims

1. A structure for preventing rain leakage in a tree house (10) built by using a tree trunk (500) as a pillar,
wherein an outer bark removal portion (520) is formed on the upper part of the roof (100) of the tree house (10) by removing the outer bark (510) of the trunk (500) circumferentially with a predetermined width, a rubber tape (600) corresponding to the width of the outer bark removal portion (520) is wound therearound, a silicone resin (800) is applied circumferentially to bond the upper end of an umbrella-shaped rubber (700) to the rubber tape (600), and the lower end of the umbrella-shaped rubber (700) is bonded to the upper part of the roof (100).

2. The structure for preventing rain leakage in a tree house (10) according to claim 1, wherein
the outer bark removal portion (520) exposes the phellogen (530) of the tree, and the rubber tape (600) is wound around the exposed phellogen (530).

3. The structure for preventing rain leakage in a tree house (10) according to claim 1 or claim 2, wherein
the rubber tape (600) is made of EPDM (ethylene propylene diene monomer rubber).

4. The structure for preventing rain leakage in a tree house (10) according to claim 1 or claim 2, wherein
a highly water-absorbent and drainable non-woven fabric (70) is wrapped around the upper portion of the upper end of the umbrella-shaped rubber (700).

## Patentansprüche

1. Struktur zum Verhindern von Regenlecks in einem Baumhaus (10), das unter Verwendung eines Baumstamms (500) als Säule errichtet wurde,
wobei ein Außenrindenentfernungsabschnitt (520) auf dem oberen Teil des Dachs (100) des Baumhauses (10) durch Entfernen der Außenrinde (510) des Baumstamms (500) um den Umfang mit einer vorbestimmten Breite gebildet wird, ein Kautschukband (600), das der Breite des Außenrindenentfernungsabschnitts (520) entspricht, um diesen herum gewickelt wird, ein Silikonharz (800) um den Umfang aufgebracht wird, um das obere Ende eines schirmförmigen Kautschuks (700) an das Kautschukband (600) zu binden, und das untere Ende des schirmförmigen Kautschuks (700) an den oberen Teil des Dachs (100) gebunden wird.

2. Struktur zum Verhindern von Regenlecks in einem Baumhaus (10) nach Anspruch 1, wobei
der Außenrindenentfernungsabschnitt (520) das Phellogen (530) des Baums freilegt und das Kautschukband (600) um das freigelegte Phellogen (530) gewickelt wird.

3. Struktur zum Verhindern von Regenlecks in einem Baumhaus (10) nach Anspruch 1 oder Anspruch 2, wobei
das Kautschukband (600) aus EPDM (Ethylen-Propylen-Dien-Monomer-Kautschuk) gefertigt ist.

4. Struktur zum Verhindern von Regenlecks in einem Baumhaus (10) nach Anspruch 1 oder Anspruch 2, wobei ein stark wasserabsorbierendes Drainagevlies (70) um den oberen Abschnitt des oberen Endes des schirmförmigen Kautschuks (700) gewickelt ist.

## Revendications

1. Structure pour empêcher une pénétration de pluie dans une cabane (10) construite en utilisant un tronc d'arbre (500) comme pilier,
dans laquelle une partie de retrait d'écorce externe (520) est formée sur la partie supérieure du toit (100) de la cabane (10) en retirant l'écorce externe (510) du tronc (500) de manière circonférentielle avec une largeur prédéterminée, une bande de caoutchouc (600) correspondant à la largeur de la partie de retrait d'écorce externe (520) est enroulée autour, une résine de silicone (800) est appliquée de manière circonférentielle pour coller l'extrémité supérieure d'un caoutchouc en forme de parapluie (700) à la bande de caoutchouc (600), et l'extrémité inférieure du caoutchouc en forme de parapluie (700) est collée à la partie supérieure du toit (100).

2. Structure pour empêcher une pénétration de pluie dans une cabane (10) selon la revendication 1, dans laquelle la partie de retrait d'écorce externe (520) expose le phellogène (530) de l'arbre, et la bande de caoutchouc (600) est enroulée autour du phellogène (530) exposé.

3. Structure pour empêcher une pénétration de pluie dans une cabane (10) selon la revendication 1 ou la revendication 2, dans laquelle
la bande de caoutchouc (600) est fabriquée en EPDM (caoutchouc monomère éthylène-propylène-diène).

4. Structure pour empêcher une pénétration de pluie dans une cabane (10) selon la revendication 1 ou la revendication 2, dans laquelle
un tissu non-tissé à haute absorption de l'eau et drainable (70) est enroulé autour de la partie supérieure de l'extrémité supérieure du caoutchouc en forme de parapluie (700).
